# EUROPÄISCHE PATENTSCHRIFT

(11) **EP 0 523 466 B1**
(45) Veröffentlichungstag und Bekanntmachung des Hinweises auf die Patenterteilung: **04.10.1995**
(21) Anmeldenummer: 92111270.2
(22) Anmeldetag: 03.07.1992
(51) Int. Cl.: F01K 23/06, F01K 23/10

(54) **Verfahren zum Betreiben einer Gas- und Dampfturbinenanlage und Anlage zur Durchführung des Verfahrens**
Method for operating a gas and steam turbine plant and plant for carrying out the method
Procédé de fonctionnement d'une installation à turbines à gaz et à vapeur et installation pour la mise en oeuvre du procédé

(30) Priorität: 17.07.1991 DE 4123731
(43) Veröffentlichungstag der Anmeldung: 20.01.1993
(73) Patentinhaber: SIEMENS AKTIENGESELLSCHAFT, 80333 München (DE)
(72) Erfinder: Lösel, Georg, W-8525 Uttenreuth (DE); Schwarzott, Werner, W-8521 Grossenseebach (DE)

(56) Entgegenhaltungen:
- EP-A- 0 129 167
- US-A- 4 288 979
- VGB KRAFTWERKSTECHNIK, Band 71, Nr. 7, Juli 1991, Seiten 619-631, Essen, DE; B. GERICKE: "Thermodynamische Auslegung, Fahrweise und Konstruktion eines GUD- Blockes mit integrierter Kohledruckvergasung (KVD)"

## Beschreibung

Die Erfindung betrifft ein Verfahren zum Betreiben einer Gas- und Dampfturbinenanlage, wobei die im entspannten Arbeitsmittel der Gasturbine enthaltene Wärme zur Erzeugung von Dampf in einem Wasser-Dampf-Kreislauf der Dampfturbine genutzt und zum Aufheizen des Arbeitsmittels Gas verwendet wird, und wobei dem Wasser-Dampf-Kreislauf vorgewärmtes Wasser für einen Kohlevergasungsprozeß entnommen wird. Sie richtet sich weiter auf eine nach diesem Verfahren arbeitende Gas- und Dampfturbinenanlage. Ein derartiges Verfahren und eine derartige Anlage sind z.B. aus VGB Kraftwerkstechnik, Band 71, Nr.7, Juli 1991, S. 619 - 631 (vgl. insbesondere Bild 4) bekannt.

Bei einer Gas- und Dampfturbinenanlage, die wahlweise mit Kohlegas oder mit Erdgas oder Öl betrieben werden kann, wird die im Abgas der Gasturbine enthaltene Wärme zur Erzeugung von Dampf für die Dampfturbine genutzt. Dabei umfaßt der Wasser-Dampf-Kreislauf der Dampfturbine üblicherweise zwei Druckstufen, die jeweils aus einem Vorwärmer sowie einem Verdampfer und einem Überhitzer aufgebaut sind. Bei einer Anlage mit integrierter Kohlevergasung wird üblicherweise dem Wasser-Dampf-Kreislauf vorgewärmtes Wasser zur Kühlung von bei der Kohlevergasung erzeugtem Rohgas entnommen. Dort erzeugter Dampf wird in den Wasser-Dampf-Kreislauf zurückgeführt. Bei einer mit Erdgas betriebenen Anlage ist eine derartige Wasserentnahme und Dampfeinspeisung nicht erforderlich.

Für den Fall, daß die im Dampferzeuger angeordneten Heizflächen der Vorwärmer, Verdampfer und Überhitzer für Kohlegasbetrieb ausgelegt sind, sind insbesondere die Heizflächen des Hochdruck-Vorwärmers oder Economizers für den Erdgasbetrieb zu groß. Dadurch besteht bei Erdgasbetrieb aufgrund der im Vergleich zum Kohlegasbetrieb zu geringen Wasser-Dampf-Menge die Gefahr einer Verdampfung des Wassers im Economizer, so daß Überhitzungen und/oder Korrosionsschäden an den Heizflächen auftreten können. Demgegenüber sind für den Fall, daß die Heizflächen im Dampferzeuger für Erdgasbetrieb ausgelegt sind, die Heizflächen des Economizers für Kohlegasbetrieb zu klein.

Bei einer aus der EP-OS-0 410 111 bekannten Gas- und Dampfturbinenanlage sind die Heizflächen im Dampferzeuger für Kohlegasbetrieb ausgelegt. Dabei wird bei Teillastbetrieb, bei dem im Vergleich zum Vollastbetrieb die Wasser-Dampf-Menge im Wasser-Dampf-Kreislauf, ähnlich wie bei Erdgasbetrieb, verhältnismäßig gering ist, die durch die Heizflächen des Vorwärmers oder Economizers strömende Wassermenge so weit erhöht, daß dort keine Verdampfung auftreten kann. Eine für die Dampferzeugung nicht benötigte Teilmenge des Speisewassers wird in zwei aufeinanderfolgenden Entspannungsstufen entspannt; anschließend wird der dabei gebildete Dampf im Dampferzeuger überhitzt und der Dampfturbine zugeführt. Dabei treten allerdings in jeder Entspannungsstufe thermodynamische Verluste auf, so daß der Gesamtwirkungsgrad der Anlage sinkt.

Der Erfindung liegt daher die Aufgabe zugrunde, ein Verfahren zum Betreiben einer Gas- und Dampfturbinenanlage anzugeben, bei dem sowohl bei Kohlegasbetrieb als auch bei Erdgasbetrieb ein möglichst hoher Gesamtwirkungsgrad auch im Teillastbetrieb erreicht wird. Dies soll bei einer derartigen Anlage mit einem möglichst geringen technischen Aufwand erreicht werden.

Bezüglich des Verfahrens wird diese Aufgabe erfindungsgemäß dadurch gelöst, daß die Solltemperatur des entnommenen Wassers durch Mischen mit einer Teilmenge des entnommenen Wassers eingestellt wird, wobei die Temperatur der Teilmenge des Wassers in einer mit dem Wasser-Dampf-Kreislauf gekoppelten Schleife verändert wird. Dabei wird vorteilhafterweise das Wasser dem Hochdruck-Vorwärmer (Economizer) entnommen, dessen Heizflächen primärseitig in den Dampferzeuger und sekundärseitig in den Wasser-Dampf-Kreislauf geschaltet sind.

Für den Fall, daß die Heizflächen im Dampferzeuger, insbesondere die Heizflächen des Economizers, für Erdgasbetrieb ausgelegt sind, wird die Teilmenge des entnommenen Wassers durch indirekten Wärmetausch mit Wasser einer Wasser-Dampf-Trommel der Hochdruckstufe aufgewärmt. Die Solltemperatur des für den Kohlevergasungsprozeß entnommenen Wassers wird somit durch Auskoppeln von Wärme aus der Hochdruckstufe, in deren Verdampfer-Heizflächen genügend Wärme erzeugt wird, erreicht.

Für den Fall, daß die Heizflächen im Dampferzeuger, insbesonder die Heizflächen des Economizers, für Kohlegasbetrieb ausgelegt sind, wird die Teilmenge des entnommenen Wassers durch indirekten Wärmetausch mit Wasser einer Wasser-Dampf-Trommel der Niederdruckstufe abgekühlt. Dadurch wird einerseits bei Erdgasbetrieb ein Ausdampfen der Heizflächen des Economizers durch Abgabe von Wärme des im Economizer unter erhöhtem Druck aufgeheizten Wassers an die Niederdruckstufe erreicht, so daß dort zusätzlich Dampf erzeugt wird. Andererseits wird bei Kohlegasbetrieb durch Abkühlen des entnommenen Wassers eine Verdampfung des Wassers auf dem Weg zum Kohlevergasungsprozeß sicher vermieden. Außerdem wird die Kapazität des entnommenen Wassers zur Aufnahme von Wärme aus dem Kohlevergasungsprozeß erhöht.

Das im Kohlevergasungsprozeß aufgewärmte Wasser wird vorteilhafterweise in den Wasser-Dampf-Kreislauf zurückgeführt.

Bezüglich der Anlage mit einem der Gasturbine nachgeschalteten Dampferzeuger, der einen in den Wasser-Dampf-Kreislauf der Dampfturbine geschalteten Vorwärmer (Economizer) und eine dem Vorwärmer nachgeschaltete Heizeinrichtung einer Hochdruckstufe sowie eine dem Vorwärmer vorgeschaltete Heizeinrichtung einer Niederdruckstufe umfaßt, wird die gestellte Aufgabe erfindungsgemäß gelöst durch einen Wärmetauscher, der primärseitig im Bereich zwischen der Niederdruckstufe und der Hochdruckstufe in den Wasser-Dampf-Kreislauf integriert ist und der sekundärseitig einer in Strömungsrichtung des Wassers hinter dem Vorwärmer an den Wasser-Dampf-Kreislauf angeschlossenen und in eine Kohlevergasungsanlage führenden Abströmleitung parallel geschaltet ist.

Zum Einstellen oder Regeln der Solltemperatur des entnommenen Wassers ist vorteilhafterweise eine in der Abströmleitung liegende Mischvorrichtung vorgesehen, in die der Wärmetauscher mündet. Als Mischvorrichtung dient beispielsweise ein Drei-Wege-Ventil.

Bei Auslegung der Heizflächen des Economizers für Erdgasbetrieb ist vorteilhafterweise der Wärmetauscher in einer Wasser-Dampf-Trommel der Hochdruckstufe angeordnet. Dagegen ist bei Auslegung der Heizflächen des Economizers für Kohlegasbetrieb der Wärmetauscher vorteilhafterweise in einer Wasser-Dampf-Trommel der Niederdruckstufe angeordnet. Dabei kann der Wärmetauscher ausgangsseitig an die Wasser-Dampf-Trommel der Hochdruckstufe angeschlossen sein.

Die mit der Erfindung erzielten Vorteile bestehen insbesondere darin, daß in den Heizflächen des Dampferzeugers auch bei extremen Betriebsbedingungen, also auch in unterschiedlichen Lastbereichen, sowohl bei Kohlegasbetrieb als auch bei Erdgasbetrieb keine oder nur geringe den thermodynamischen Kreisprozeß beeinträchtigende Drosselverluste entstehen. Dadurch treten nur innerhalb zulässiger Grenzen liegende Betriebszustände auf. Beim Übergang von Erdgasbetrieb auf Kohlegasbetrieb und umgekehrt erfolgt eine stufenlose Wärmeverschiebung über den Wärmetauscher.

Zur näheren Erläuterung der Erfindung werden anhand einer Zeichnung Ausführungsbeispiele beschrieben; darin zeigen:
- FIG 1: eine schematische Darstellung einer Gas- und Dampfturbinenanlage mit einem Wärmetauscher in einer Wasser-Dampf-Trommel einer Hochdruckstufe,
- FIG 2: eine Anlage gemäß Figur 1 mit einem Wärmetauscher in einer Wasser-Dampf-Trommel einer Niederdruckstufe und
- FIG 3: im Ausschnitt eine Anlage gemäß Figur 2 mit einer weiteren Schaltung des Wärmetauschers.

Einander entsprechende Teile sind in allen Figuren mit den gleichen Bezugszeichen versehen.

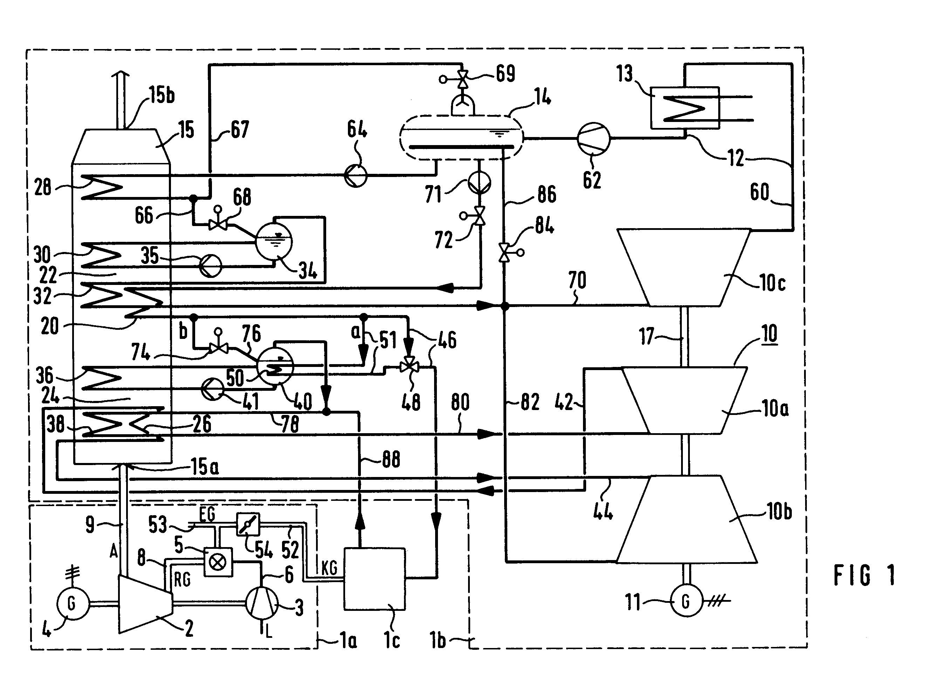

Eine Gas- und Dampfturbinenanlage gemäß Figur 1 umfaßt eine Gasturbinenanlage 1a und eine Dampfturbinenanlage 1b. Der Gasturbinenanlage 1a ist eine Kohlevergasungsanlage 1c vorgeschaltet. Die Gasturbinenanlage 1a umfaßt eine Gasturbine 2 mit angekoppeltem Luftverdichter 3 und Generator 4 sowie eine der Gasturbine 2 vorgeschaltete Brennkammer 5, die an eine Frischluftleitung 6 des Luftverdichters 3 angeschlossen ist.

Die Dampfturbinenanlage 1b umfaßt eine Dampfturbine 10 mit angekoppeltem Generator 11 und in einem Wasser-Dampf-Kreislauf 12 einen der Dampfturbine 10 nachgeschalteten Kondensator 13 und einen dem Kondensator nachgeschalteten Speisewasserbehälter 14 sowie einen Dampferzeuger 15.

Die Dampfturbine 10 besteht aus einem Hochdruckteil 10a, einem Mitteldruckteil 10b und einem Niederdruckteil 10c, die über eine gemeinsame Welle 17 den Generator 11 antreiben.

Zum Zuführen der Abgase A aus der Gasturbine 2 in den Dampferzeuger 15 ist eine Abgasleitung 9 an einen Eingang 15a des Dampferzeugers 15 angeschlossen. Das Abgas A verläßt den Dampferzeuger 15 über dessen Ausgang 15b in Richtung auf einen nicht dargestellten Kamin.

Der Dampferzeuger 15 umfaßt einen Hochdruck-Vorwärmer oder Economizer 20, eine Niederdruck-Heizeinrichtung 22, eine Hochdruck-Heizeinrichtung 24 und einen Zwischenüberhitzer 26.

Die Neiderdruck-Heizeinrichtung 22 besteht aus einem Vorwärmer 28, einem Verdampfer 30 und einem Überhitzer 32, die zusammen mit dem Niederdruckteil 10c der Dampfturbine 10 und einer Wasser-Dampf-Trommel 34 die Niederdruckstufe des Wasser-Dampf-Kreislaufs 12 bilden.

Die Hochdruck-Heizeinrichtung 24 umfaßt einen Verdampfer 36 und einen Überhitzer 38, die zusammen mit dem Hochdruckteil 10a der Dampfturbine 10 sowie mit dem Economizer 20 und einer Wasser-Dampf-Trommel 40 die Hochdruckstufe des Wasser-Dampf-Kreislaufs 12 bilden.

Der Zwischenüberhitzer 26 ist eingangsseitig über eine Dampfleitung 42 an den Hochdruckteil 10a und ausgangsseitig über eine Dampfleitung 44 an den Mitteldruckteil 10b der Dampfturbine 10 angeschlossen.

An den Wasser-Dampf-Kreislauf 12 ist in Stömungsrichtung des Wassers hinter dem Economizer 20 eine Abströmleitung 46 angeschlossen, die über ein Dreiwegeventil 48 in die Kohlevergasungsanlage 1c führt. An die Abströmleitung 46 ist ein Wärmetauscher 50 sekundärseitig angeschlossen, der primärseitig in der Wasser-Dampf-Trommel 40 angeordnet ist.

Beim Betrieb der Gas- und Dampfturbinenanlage 1 wird der Brennkammer 5 als Brennstoff Kohlegas KG aus der Kohlevergasungsanlage 1c über eine Zuführleitung 52 oder Erdgas EG über eine Zuführleitung 53 wahlweise zugeführt. Beim Übergang von Erdgasbetrieb auf Kohlegasbetrieb wird eine Klappe 54 betätigt, die im Ausführungsbeispiel in der Zuführleitung 52 liegt.

Der Brennstoff KG oder EG wird in der Brennkammer 5 mit der verdichteten Frischluft L aus dem Luftverdichter 3 verbrannt. Das bei der Verbrennung entstehende heiße Rauchgas RG wird über eine Rauchgasleitung 8 in die Gasturbine 2 geleitet. Dort entspannt es sich und treibt dabei die Gasturbine 2 an. Diese wiederum treibt den Luftverdichter 3 und den Generator 4 an.

Das aus der Gasturbine 2 austretende heiße Abgas AG wird über eine Abgasleitung 9 in den Dampferzeuger 15 eingeleitet und dort zur Erzeugung von Dampf für die Dampfturbine 10 genutzt. Zu diesem Zweck sind der Abgasstrom und der Wasser-Dampf-Kreislauf 12 im Gegenstrom miteinander verknüpft.

Der aus dem Niederdruckteil 10c der Dampfturbine 10 austretende Dampf wird über eine Dampfleitung 60 dem Kondensator 13 zugeführt und kondensiert dort. Das Kondensat wird über eine Kondensatpumpe 62 in den Speisewasserbehälter 14 gepumpt. Aus dem Speisewasserbehälter 14 wird Wasser über eine Umwälz-Pumpe 64 in den Vorwärmer 28 der Niederdruck-Heizeinrichtung 22 gepumpt und dort vorgewärmt. Das im Vorwärmer 28 vorgewärmte Wasser strömt über eine Leitung 66, in die ein Ventil 68 geschaltet ist, in die Wasser-Dampf-Trommel 34. Danach wird das Wasser mit Hilfe des Verdampfers 30 verdampft. Dazu wird Wasser aus der Wasser-Dampf-Trommel 34 mit Hilfe einer Pumpe 35 in den Verdampfer 30 und von dort zurück in die Wasser-Dampf-Trommel 34 gepumpt. Eine einstellbare Teilmenge des vorgewärmten Wassers strömt über eine Leitung 67, in die ein Ventil 69 geschaltet ist, in den Speisewasserbehälter 14 zurück. Der in der Wasser-Dampf-Trommel 34 abgetrennte Dampf wird dem Überhitzer 32 zugeführt und strömt von dort in überhitztem Zustand über eine Dampfleitung 70 in den Niederdruckteil 10c der Dampfturbine 10.

Das der Hochdruckstufe zugeführte Wasser aus dem Speisewasserbehälter 14 wird über eine Hochdruck-Pumpe 71 und ein Ventil 72 zunächst in den Hochdruck-Vorwärmer oder Economizer 20 gepumpt und dort aufgewärmt. Eine mit einem Ventil 74 einstellbare Teilmenge b des aufgewärmten Wassers strömt über eine Leitung 76 in die Wasser-Dampf-Tromme1 40. Anschließend wird das Wasser mit Hilfe des Verdampfers 36 verdampft, wobei Wasser aus der Wasser-Dampf-Trommel 40 mittels einer Pumpe 41 in den Verdampfer 36 und von dort zurück in die Wasser-Dampf-Trommel 40 gepumpt wird. Der in der Wasser-Dampf-Trommel 40 gebildete Dampf strömt über eine Leitung 78 in den Überhitzer 38 und von dort in überhitztem Zustand über eine Dampfleitung 80 in den Hochdruckteil 10a der Dampfturbine 10. Der im Hochdruckteil 10a entspannte Dampf strömt über die Leitung 42 in den Zwischenüberhitzer 26 und von dort in den Mitteldruckteil 10b der Dampfturbine 10. Der im Mitteldruckteil 10b entspannte Dampf strömt über eine Dampfleitung 82, in die die Dampfleitung 70 mündet, zusammen mit dem Dampf aus dem Niederdruck-Überhitzer 32 in den Niederdruckteil 10c der Dampfturbine 10. Ein Teil des aus dem Mitteldruckteil 10b der Dampfturbine 10 abströmenden Dampfes strömt bei geöffnetem Ventil 84 über eine Dampfleitung 86 in den Speisewasserbehälter 14.

Im Ausführungsbeispiel gemäß Figur 1 sind die Heizflächen des Hochdruck-Vorwärmers oder Economizers 20 für Erdgasbetrieb ausgelegt. Bei Kohlegasbetrieb wird die Temperatur des dem Wasser-Dampf-Kreislauf 12 über die Abströmleitung 46 entnommenen Wassers durch Mischen mit einer in einer Schleife 51 durch den Wärmetauscher 50 geführten Teilmenge a des entnommenen Wassers eingestellt. Dabei wird die Temperatur der Teilmenge a durch Aufnahme von im Verdampfer 36 erzeugter Wärme erhöht, so daß sich durch geeignete Einstellung des Drei-Wege-Ventils 48 auf dessen Abströmseite eine der Solltemperatur entsprechende Mischtemperatur einstellt. Das auf die gewünschte Temperatur eingestellte Wasser strömt über die Leitung 46 in die Kohlevergasungsanlage 1c und wird dort durch indirekten Wärmetausch mit bei dem Kohlevergasungsprozeß erzeugtem Rohgas verdampft. Der in der Kohlevergasungsanlage 1c erzeugte Dampf strömt über eine Leitung 88, die an die Leitung 78 angeschlossen ist, in den Überhitzer 38 und wird somit dem Wasser-Dampf-Kreislauf 12 wieder zugeführt. Die im Ausführungsbeispiel gemäß Figur 1 beschriebene Anlage 1 eignet sich insbesondere zur Nachrüstung einer bestehenden, für Erdgasbetrieb ausgelegten Anlage 1 mit einer Kohlevergasungsanlage 1c.

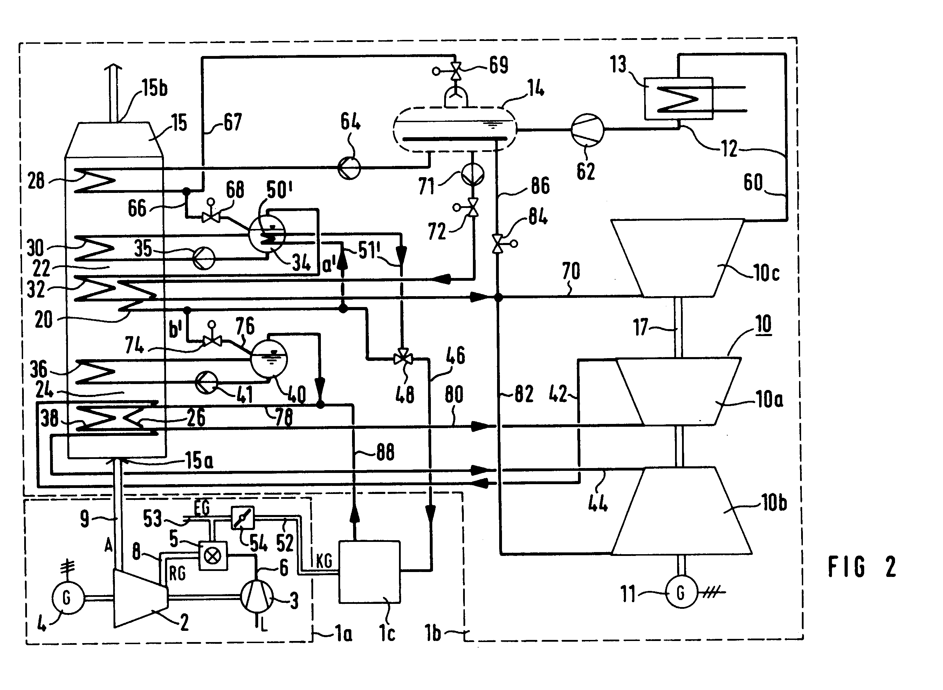

Beim Ausführungsbeispiel gemäß Figur 2 sind die Heizflächen des Economizers oder Hochdruck-Vorwärmers 20 für Kohlegasbetrieb ausgelegt. Im übrigen sind in der schematischen Darstellung in Figur 2 die Gasturbinenanlage 1a mit der daran angeschlossenen Kohlevergasungsanlage 1c und die Dampfturbinenanlage 1b wie in der schematischen Darstellung gemäß Figur 1 aufgebaut. In diesem Fall ist der Wärmetauscher 50' primärseitig in der Wasser-Dampf-Trommel 34 angeordnet und somit im Wasser-Dampf-Kreislauf 12 in die Niederdruckstufe integriert.

Bei Kohlegasbetrieb wird dem Wasser-Dampf-Kreislauf 12 in Strömungsrichtung des Wassers hinter dem Economizer 20 entnommenes und der Kohlevergasungsanlage 1c über die Abströmleitung 46 zugeführtes Wasser durch Abgabe von überschüssiger Wärme an die Niederdruckstufe abgekühlt. Dazu wird die ebenfalls in einer Schleife 51' geführte Teilmenge a' des entnommenen Wassers durch indirekten Wärmetausch mit dem Wasser der Wasser-Dampf-Trommel 34 derart verändert, daß sich durch Mischen des entnommenen Wassers mit der Teilmenge a' bei geeigneter Einstellung des Ventils 48 auf dessen Abströmseite in der Leitung 46 die Solltemperatur einstellt.

Die Abmessungen des Wärmetauschers 50' - ebenso wie die des Wärmetauschers 50 gemäß Figur 1 - können aufgrund des besonders guten Wärmeübergangs von Wasser zu Wasser oder von Wasser zu Dampf so klein gewählt werden, daß der Wärmetauscher 50 (Figur 1) oder 50' (Figur 2) mit geringem Aufwand in eine bereits vorhandene Trommel 34 bzw. 40 installiert werden kann.

Bei Erdgasbetrieb wird ein Ausdampfen der Heizflächen des Economizers 20 durch Abgabe von Wärme des im Economizer 20 bei hohem Druck aufgeheizten Wassers an die Niederdruckstufe erreicht. Dort wird zusätzlich Dampf erzeugt. Der Übergang von Erdgas- auf Kohlegasbetrieb erfolgt durch stufenlose Wärmeverschiebung über den Wärmetauscher 50'.

Bei Kohlegasbetrieb wird durch Abkühlen des entnommenen Wassers eine Verdampfung des Wassers in der Abströmleitung 46 sicher vermieden. Außerdem wird die Kapazität des entnommenen Wassers zur Aufnahme von Wärme aus dem bei dem Kohlevergasungsprozeß erzeugten Rohgas erhöht.

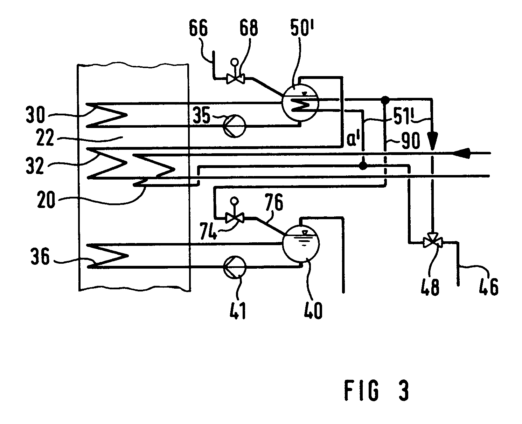

Bei der in Figur 3 im Ausschnitt dargestellten Anlage ist der Wärmetauscher 50' ausgangsseitig über eine in die Leitung 76 mündende Leitung 90 mit der Wasser-Dampf-Trommel 40 der Hochdruckstufe verbunden. Dabei wird im Gegensatz zum Ausführungsbeispiel gemäß Figur 2, bei dem nur der in der Schleife 51' geführte Teilstrom a' des entnommenen Wassers abgekühlt wird, im Ausführungsbeispiel gemäß Figur 3 das gesamte in die Wasser-Dampf-Trommel 40 der Hochdruckstufe strömende Wasser abgekühlt.

Die Schaltung des Wärmetauschers gemäß Figur 2 hat gegenüber der Variante gemäß Figur 3 den Vorteil, daß der Wärmetauscher 50' lediglich für den in der Schleife 51' geführten Teilstrom a' auszulegen ist. Bei der Variante gemäß Fiogur 2 wird ein Maximum an Hochdruckdampf produziert, so daß ein besonders hoher Wirkungsgrad erreicht wird. Dabei muß allerdings, im Gegensatz zur Variante gemläß Figur 3, das Ventil 74 zur Regelung von Wasser in Siedepunktnähe ausgelegt sein.

Beim Übergang von einer Gasart auf die andere, insbesondere beim Übergang von Kohlegasbetrieb auf Erdgasbetrieb, bei dem eine um die der Kohlevergasung zuzuführenden Wassermenge verringerte Wasser-Dampf-Menge bewegt werden muß, ist es zweckmäßig, den Druck im Economizer 20 anzuheben, so daß zum Wärmetauscher 50' nur Wasser strömt.

Ähnlich wie beim Erdgasbetrieb wird auch bei Teillastbetrieb, bei dem im Dampferzeuger 15 vermehrt Wärme in den Bereich der Heizflächen des Economizers 20 gelangt, durch Einschalten des Wärmetauschers 50 (Figur 1) oder 50' (Figuren 2 und 3) in den Wasser-Dampf-Kreislauf 12 ein Ausdampfen im Economizer 20 vermieden.

## Patentansprüche

1. Verfahren zum Betreiben einer Gas- und Dampfturbinenanlage, wobei die im entspannten Arbeitsmittel (RG) der Gasturbine (2) enthaltene Wärme zur Erzeugung von Dampf in einem Wasser-Dampf-Kreislauf (12) der Dampfturbine (10) genutzt und zum Aufheizen des Arbeitsmittels (RG) Gas verwendet wird, und wobei dem Wasser-Dampf-Kreislauf (12) vorgewärmtes Wasser für einen Kohlevergasungsprozeß entnommen wird,
**dadurch gekennzeichnet,**
daß die Solltemperatur des entnommenen Wassers durch Mischen mit einer Teilmenge (a, a') des entnommenen Wassers eingestellt wird, indem die Temperatur der Teilmenge (a, a') in einer mit dem Wasser-Dampf-Kreislauf (12) gekoppelten Schleife (50, 51') verändert wird.

2. Verfahren nach Anspruch 1,
**dadurch gekennzeichnet,** daß das Wasser einem Hochdruck-Vorwärmer (20) entnommen wird, dessen Heizflächen primärseitig in den Dampferzeuger (15) und sekundärseitig in den Wasser-Dampf-Kreislauf (12) geschaltet sind.

3. Verfahren nach Anspruch 1 oder 2,
**dadurch gekennzeichnet,** daß die Teilmenge (a) des entnommenen Wassers durch indirekten Wärmetausch mit Wasser einer Wasser-Dampf-Trommel (40) der Hochdruckstufe aufgewärmt wird (Figur 1).

4. Verfahren nach Anspruch 1 oder 2,
**dadurch gekennzeichnet,** daß die Teilmenge (a') des entnommenen Wassers durch indirekten Wärmetausch mit Wasser einer Wasser-Dampf-Trommel (40) der Niederdruckstufe abgekühlt wird (Figuren 2 und 3).

5. Verfahren nach einem der Ansprüche 1 bis 4,
**dadurch gekennzeichnet,** daß das im Kohlevergasungsprozeß aufgeheizte Wasser in den Wasser-Dampf-Kreislauf (12) zurückgeführt wird.

6. Gas- und Dampfturbinenanlage mit einem der Gasturbine (2) nachgeschalteten Dampferzeuger (15), der einen in den Wasser-Dampf-Kreislauf (12) der Dampfturbine (10) geschalteten Vorwärmer (20) und eine dem Vorwärmer (20) nachgeschaltete Heizeinrichtung (24) einer Hochdruckstufe sowie eine dem Vorwärmer (20) vorgeschaltete Heizeinrichtung (22) einer Niederdruckstufe umfaßt, insbesondere zur Durchführung des Verfahrens nach einem der Ansprüche 1 bis 5, **gekennzeichnet durch** einen Wärmetauscher (50, 50'), der primärseitig im Bereich zwischen der Niederdruckstufe und der Hochdruckstufe in den Wasser-Dampf-Kreislauf (12) integriert ist, und der sekundärseitig einer in Strömungsrichtung des Wassers hinter dem Vorwärmer (20) an den Wasser-Dampf-Kreislauf (12) angeschlossenen und in eine Kohlevergasungsanlage (1c) führenden Abströmleitung (46) parallel geschaltet ist.

7. Anlage nach Anspruch 6,
**dadurch gekennzeichnet,** daß der Wärmetauscher (50, 50') in eine in der Abströmleitung (46) liegende Mischvorrichtung (48), vorzugsweise ein Drei-Wege-Ventil, mündet.

8. Anlage nach Anspruch 6 oder 7,
**dadurch gekennzeichnet,** daß der Wärmetauscher (50) in einer Wasser-Dampf-Trommel (40) der Hochdruckstufe angeordnet ist (Figur 1).

9. Anlage nach Anspruch 6 oder 7,
**dadurch gekennzeichnet,** daß der Wärmetauscher (50') in einer Wasser-Dampf-Trommel (34) der Niederdruckstufe angeordnet ist (Figuren 2 und 3).

10. Anlage nach Anspruch 9,
**dadurch gekennzeichnet,** daß der Wärmetauscher (50') ausgangsseitig an die Waser-Dampf-Trommel (40) der Hochdruckstufe angeschlossen ist (Figur 3).

## Claims

1. Method for operating a gas and steam turbine plant, in which the heat contained in the expanded operating medium (RG) of the gas turbine (2) is used to generate steam in a water-steam circuit (12) of the steam turbine (10), and gas is utilized to heat the operating medium (RG), and in which preheated water is drawn from the water-steam circuit (12) for a coal gasification process,
characterized in that the target temperature of the drawn water is adjusted by mixing it with a partial quantity (a, a') of the drawn water, by altering the temperature of the partial quantity (a, a') in a loop (50 50') coupled with the water-steam circuit (12).

2. Method according to claim 1, characterized in that the water is drawn from a high pressure preheater (20), the heating surfaces of which are connected on the primary side to the steam generator (15) and on the secondary side to the water-steam circuit (12).

3. Method according to claim 1 or 2, characterized in that the partial quantity (a) of the drawn water is heated by indirect heat exchange with water from a water-steam drum (40) of the high pressure stage (Figure 1).

4. Method according to claim 1 or 2,
characterized in that the partial quantity (a') of the drawn water is cooled down by indirect heat exchange with water from a water-steam drum (40) of the low pressure stage (Figures 2 and 3).

5. Method according to one of claims 1 to 4,
characterized in that the water heated up in the coal gasification process is returned into the water-steam circuit (12).

6. Gas and steam turbine plant, comprising a steam generator (15) which is connected downstream of the gas turbine (2) and which includes a preheater (20), connected into the water-steam circuit (12) of the steam turbine (10), and a heating apparatus (24) of a high pressure stage connected downstream of the preheater (20) as well as a heating apparatus (22) of a low pressure stage connected upstream of the preheater (20), more particularly for implementing the method according to one of claims 1 to 5, characterized by a heat exchanger (50, 50') which on the primary side is incorporated into the water-steam circuit (12) in the region between the low pressure stage and the high pressure stage, and on the secondary side is connected in parallel with an outflow line (46) which is connected to the water-steam circuit (12) downstream of the preheater (20), in the direction of flow of the water, and which leads to a coal gasification plant (1c).

7. Plant according to claim 6, characterized in that the heat exchanger (50, 50') discharges into a mixing device (48), preferably a three-way valve, situated in the outflow line (46).

8. Plant according to claim 6 or 7, characterized in that the heat exchanger (50) is disposed in a water-steam drum (40) of the high pressure stage (Figure 1).

9. Plant according to claim 6 or 7, characterized in that the heat exchanger (50') is disposed in a water-steam drum (34) of the low pressure stage (Figures 2 and 3).

10. Plant according to claim 9, characterized in that the heat exchanger (50') is connected on the output side to the water-steam drum (40) of the high pressure stage (Figure 3).

## Revendications

1. Procédé d'exploitation d'une installation à turbines à vapeur et à gaz, qui consiste à utiliser la chaleur contenue dans le fluide de travail (RG) détendu de la turbine (2) à gaz pour produire de la vapeur dans un circuit eau-vapeur de la turbine (10) à vapeur et pour chauffer du gaz du fluide de travail (RG), et à prélever de l'eau préchauffée du circuit (12) eau-vapeur pour l'utiliser dans une opération de gazéification du charbon,
caractérisé en ce qu'il consiste
à régler la valeur de consigne de la température de l'eau prélevée en la mélangeant à une partie (a, a') de l'eau prélevée, la température de cette partie (a, a') de l'eau prélevée étant modifiée dans une boucle (50, 51')de circuit couplée au circuit (12) eau-vapeur.

2. Procédé selon la revendication 1,
caractérisé en qu'il consiste à prélever l'eau d'un préchauffeur (20) à haute pression, dont les surfaces de chauffe sont connectées du côté primaire à un générateur (15) de vapeur et du côté secondaire au circuit (12) eau-vapeur.

3. Procédé selon la revendication 1 ou 2,
caractérisé en ce qu'il consiste à réchauffer la partie (a) de l'eau prélevée par échange de chaleur indirect avec de l'eau d'un tambour (40) eau-vapeur de l'étage à haute pression (Figure 1).

4. Procédé selon la revendication 1 ou 2,
caractérisé en ce qu'il consiste à refroidir la partie (a') de l'eau prélevée par échange de chaleur indirect avec de l'eau d'un tambour (40) eau-vapeur de l'étage basse pression (Figures 2 et 3).

5. Procédé selon l'une des revendications 1 à 4,
caractérisé en ce qu'il consiste à retourner l'eau chauffée dans l'opération de gazéification de charbon au circuit (12) eau-vapeur.

6. Installation à turbines à vapeur et à gaz comportant un générateur (15) de vapeur monté en aval de la turbine (2) à gaz, ce générateur comprenant un préchauffeur (20) monté dans le circuit (12) eau-vapeur de la turbine (10) à vapeur et un dispositif (24) chauffant d'un étage haute pression monté en aval du préchauffeur (20) ainsi qu'un dispositif (22) chauffant d'un étage basse pression monté en amont du préchauffeur (20), notamment pour la mise en oeuvre du procédé selon l'une des revendications 1 à 5, caractérisée par un échangeur de chaleur (50, 50'), qui est intégré du côté primaire dans une zone entre l'étage basse pression et l'étage haute pression, au circuit (12) eau-vapeur, et qui, du coté secondaire est monté parallèlement à un conduit d'évacuation (46) qui passe dans un gazogène (Ic) à charbon et qui est raccordé au circuit (12) eau-vapeur en aval, dans le sens d'écoulement de l'eau, du préchauffeur (20).

7. Installation selon la revendication 6,
caractérisée en ce que l'échangeur de chaleur (50, 50') débouche dans un dispositif (48) mélangeur prévu dans le circuit d'évacuation (46), de préférence une vanne à 3 voies.

8. Installation selon la revendication 6 ou 7,
caractérisée en ce que l'échangeur de chaleur (50) est disposé dans un tambour eau-vapeur (40) de l'étage à haute pression (Figure 3).

9. Installation selon la revendication 6 ou 7,
caractérisée en ce que l'échangeur de chaleur (50') est disposé dans un tambour eau-vapeur (34) de l'étage à basse pression (Figures 2 et 3).

10. Installation selon la revendication 9,
caractérisée en ce que l'échangeur de chaleur (50') est raccordée du côté de la sortie au tambour eau-vapeur (40) de l'étage à haute pression (Figure 3).
